# EUROPEAN PATENT APPLICATION

(11) **EP 1 916 403 A1**
(43) Date of publication of application: **30.04.2008**
(21) Application number: 07119008.6
(22) Date of filing: 22.10.2007
(51) Int. Cl.: F02D 41/14, G01N 27/406

(54) **Control circuit for multiple oxygen sensor heater elements**

(30) Priority: 26.10.2006 US 586875
(71) Applicant: Delphi Technologies, Inc., Troy, Michigan 48007 (US)
(72) Inventor: Nair, Balakrishnan V., 760283 Singapore (SG)
(74) Representative: Denton, Michael John

(57) **Abstract**

A common current sensing resistor (48) is used to monitor the current supplied to the heater elements (40, 42) of multiple heated oxygen sensors of an engine exhaust gas emission control system. Two or more sensor heater elements (40, 42) arc coupled to a single current sensing resistor (48) to produce a single current feedback signal (74) for analysis by a programmed controller (52). The controller (52) synchronizes its current monitoring function with its heater activation control to diagnose heater element fault conditions.

## Description

### TECHNICAL FIELD

The present invention relates to a control circuit for the heater element of an electrically heated oxygen sensor used in an engine emission control system, and more particularly to a control circuit for multiple oxygen sensor heater elements.

### BACKGROUND OF THE INVENTION

Engine emission control systems in motor vehicles typically employ one or more catalytic converters in the exhaust gas stream. The conversion efficiency of a given catalytic converter is optimized and diagnosed through the use of feedback signals developed by exhaust gas oxygen sensors. Since the oxygen sensors only operate in a warmed-up state, it is customary to package each oxygen sensor with an integral electric heater element that is activated by a heater control circuit following engine start-up to quickly heat up the oxygen sensor and maintain it at or above a desired operating temperature.

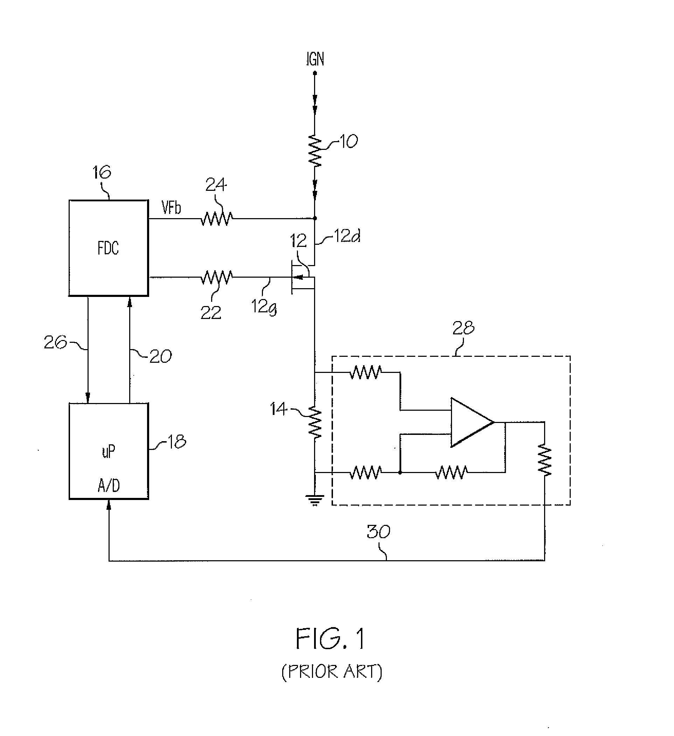

FIG. 1 depicts an electrical diagram of a typical heater control circuit for an oxygen sensor heater element 10. One terminal of the heater element 10 is coupled to the vehicle ignition voltage IGN, while the other terminal is coupled to ground through the series combination of FET 12 and sense resistor 14. The FET 12 is biased on and off by FET driver circuit (FDC) 16 under the control of a programmed microprocessor (uP) 18. The µP 18 supplies a control signal to FDC 16 via line 20, and FDC supplies a corresponding gate drive signal to the FET gate 12g via resistor 22. The FDC 16 receives a feedback voltage Vfb from the FET drain 12d via resistor 24. The FDC 16 monitors the feedback voltage Vfb to detect various heater circuit fault conditions, and provides a fault status signal to µP 18 via line 26. The voltage across sense resistor 14 is proportional to the current supplied to heater element 10; this voltage is amplified by an operational amplifier circuit 28 and supplied to an A/D input port of µP 18 via line 30 as a measure of the heater element current.

Since most emission control systems require exhaust gas sensing both upstream and downstream of each catalytic converter, it is not unusual for a system to have two, or even four, oxygen sensors, depending on the number of catalytic converters in the engine exhaust system. In a typical controller, the heater circuit elements 12, 14, 16, 22, 24 and 28 of FIG. 1 are replicated for each oxygen sensor, which significantly adds to the manufacturing cost of the controller due to replicated circuit components, the circuit board area required for the replicated components, and the required number of microprocessor A/D ports. Accordingly, what is needed is a more cost-effective control circuit for multiple oxygen sensor heater elements.

### SUMMARY OF THE INVENTION

The present invention provides an improved control apparatus for multiple oxygen sensor heater elements, where a common current sensing resistor is used to monitor the current supplied to multiple heater elements.
Two or more heater elements are coupled to a single current sensing resistor to produce a single current feedback signal for analysis by a programmed controller. The controller synchronizes its current monitoring function with its heater activation control to diagnose heater element fault conditions.

### BRIEF DESCRIPTION OF THE DRAWINGS

FIG. 1 is a circuit diagram of a prior art control circuit for an oxygen sensor heater element;

FIG. 2 is a circuit diagram of a control circuit, including a programmed microprocessor, for multiple oxygen sensor heater elements according to this invention;

FIG. 3 is a timing diagram for a heater activation and current monitoring control carried out by the microprocessor of FIG. 2, according to a first embodiment of this invention;

FIG. 4 is a timing diagram for a heater activation and current monitoring control carried out by the microprocessor of FIG. 2, according to a second embodiment of this invention;

FIG. 5 is a flow diagram representative of a routine carried out by the microprocessor of FIG. 2 for diagnosing heater element over-current faults; and

FIG. 6 is a flow diagram representative of a routine carried out by the microprocessor of FIG. 2 for diagnosing heater element short circuit faults.

### DESCRIPTION OF THE PREFERRED EMBODIMENT

The apparatus of the present invention is disclosed in the context of an engine emission control system having two heated oxygen sensors, where a single current sensing resistor used to monitor the current supplied to the heater elements of both oxygen sensors. However, the invention is also applicable to systems including more than two oxygen sensors - that is, the same current sensing resistor can also be used to monitor the current supplied to the heater elements of the additional sensors.

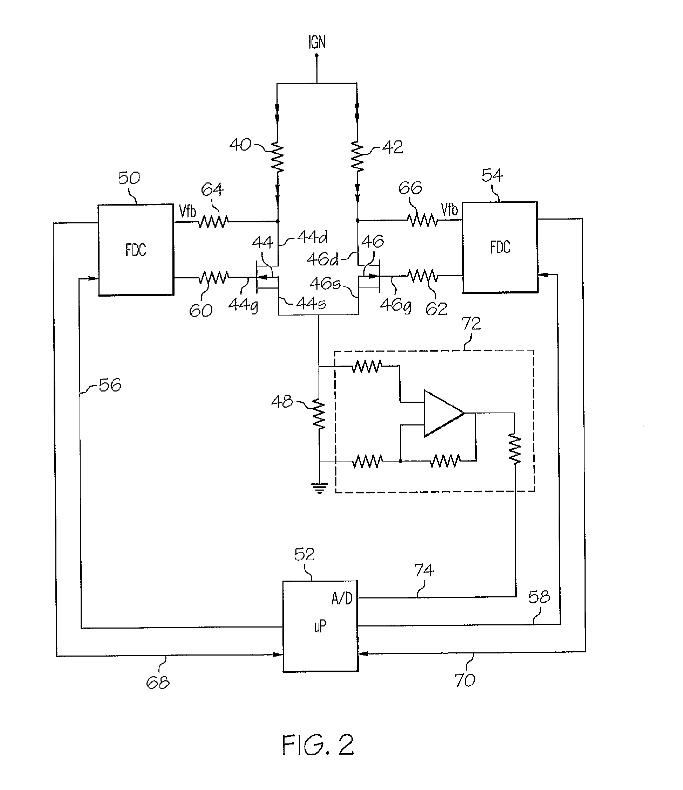

Referring to FIG. 2, the reference numerals 40 and 42 designate the heater elements of two different exhaust gas oxygen sensors of an emission control system for an internal combustion engine. Connectors couple a terminal of each heater element 40, 42 to the engine ignition voltage IGN as shown. Additional connectors couple the other terminal of heater element 40 to the drain 44d of FET 44, and the other terminal of heater element 42 to the drain 46d of FET 46. The FET source terminals 44s and 46s are both coupled to ground potential through a single sense resistor 48.

The FET 44 is biased on and off by a first FET driver circuit (FDC) 50 under the control of a programmed microprocessor (µP) 52, and the FET 46 is biased on and off by a second FET driver circuit (FDC) 54 under the control of µP 52. The µP 52 supplies duty cycle control signals to FDCs 50, 54 via lines 56, 58, and the FDCs 50, 54 supply corresponding gate drive signals to the gates 44g, 46g of FETs 44, 46 via resistors 60, 62. The FDCs 50, 54 each receive a feedback voltage Vfb from the drain 44d, 46d of the respective FET 44, 46 via a resistor 64, 66. The FDCs 50, 54 monitor the feedback voltages Vfb to detect various fault conditions including short-to-battery faults of the respective heater elements 40, 42, and provide fault status signals to µP 52 via lines 68, 70. A short-to-battery fault occurs when a heater element terminal connected to the FET 44 or 46 is accidentally shorted to the ignition voltage IGN.

The currents supplied to heater elements 40 and 42 due to the operation of FETs 44 and 46 both pass through the sense resistor 48. When FET 44 is on and FET 46 is off, the voltage across sense resistor 48 is proportional to the current supplied to heater element 40. When FET 44 is off and FET 46 is on, the voltage across sense resistor 48 is proportional to the current supplied to heater element 42. And when FETs 44 and 46 are both on, the voltage across sense resistor 48 is proportional to the sum of the currents supplied to heater elements 40 and 42. The sense resistor voltage is amplified by an operational amplifier circuit 72 and supplied as a heater element current signal to an A/D input port of µP 52 via line 74. As explained below, µP 52 synchronizes its current monitoring function with the timing of its FET on/off commands to diagnose current fault conditions for both heater elements 40 and 42.

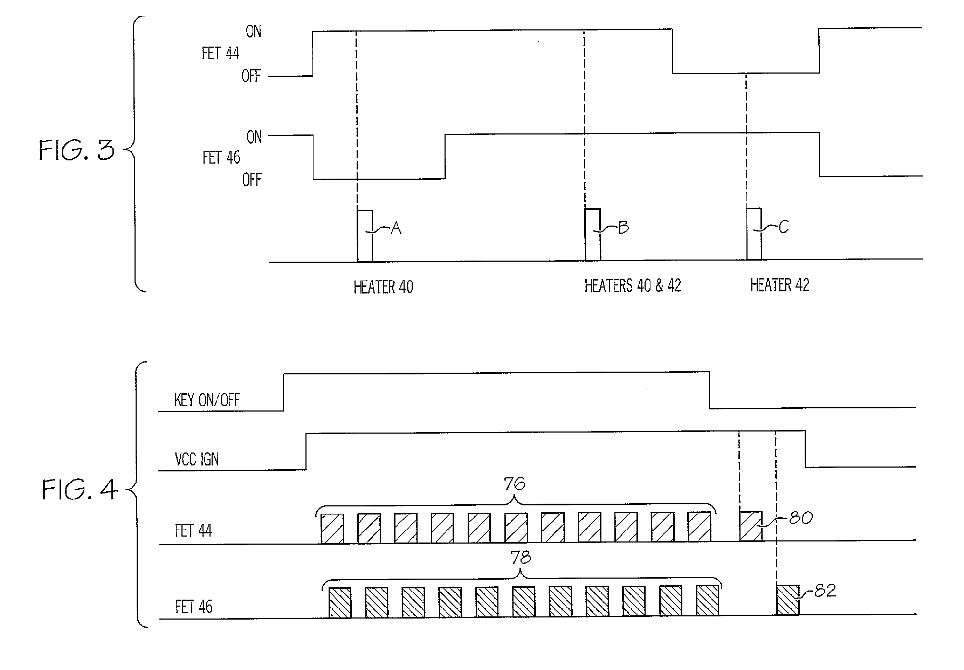

The timing diagrams of FIG. 3 show representative on/off duty cycle modulation patterns for the FETs 44 and 46 of FIG. 2, and three different sample points (A, B, C) of the heater element current signal on line 74. As illustrated, the duty cycle patterns of FETs 44 and 46 are staggered so that their conduction intervals are not completely overlapping. With the illustrated embodiment where two heater elements 40, 42 are coupled through as single sense resistor 48, there are four possible conditions: (1) FET 44 on and FET 46 off; (2) FET 44 on and FET 46 on, (3) FET 44 off and FET 46 on; and (4) FET 44 off and FET 46 off. The first of these conditions occurs at sample point A, and the sampled signal represents the current in heater element 40 only. The second condition occurs at sample point B, and the sampled signal represents the sum of the currents in heater elements 40 and 42. The third condition occurs at sample point C, and the sampled signal represents the current in heater element 42 only. The fourth condition is not pertinent to current monitoring because the heater elements 40 and 42 are both deactivated. Of course, the heater element current signal can be sampled more frequently than shown. For example, the heater element current signal can be sampled eight times per modulation period if the modulation frequency is 16.0 Hz and the current signal is sampled every 7.81 msec.

The timing diagrams of FIG. 4 illustrate an additional opportunity for individual sampling of the heater element currents. As illustrated, the ignition voltage IGN is active shortly after engine key-on, and for a calibrated interval of approximately eight seconds after engine key-off. The FETs 44 and 46 are modulated on and off during the key-on period as generally designated by the reference numerals 76 and 78, respectively, and then individually activated after engine key-off while the ignition voltage IGN is still active, as indicated by the reference numerals 80 and 82. This allows µP 52 to individually sample the heater element currents before they cool from their normal operating temperatures. These key-off current samples can be used to confirm fault conditions diagnosed during the key-on interval, as well as to resolve ambiguous fault conditions.

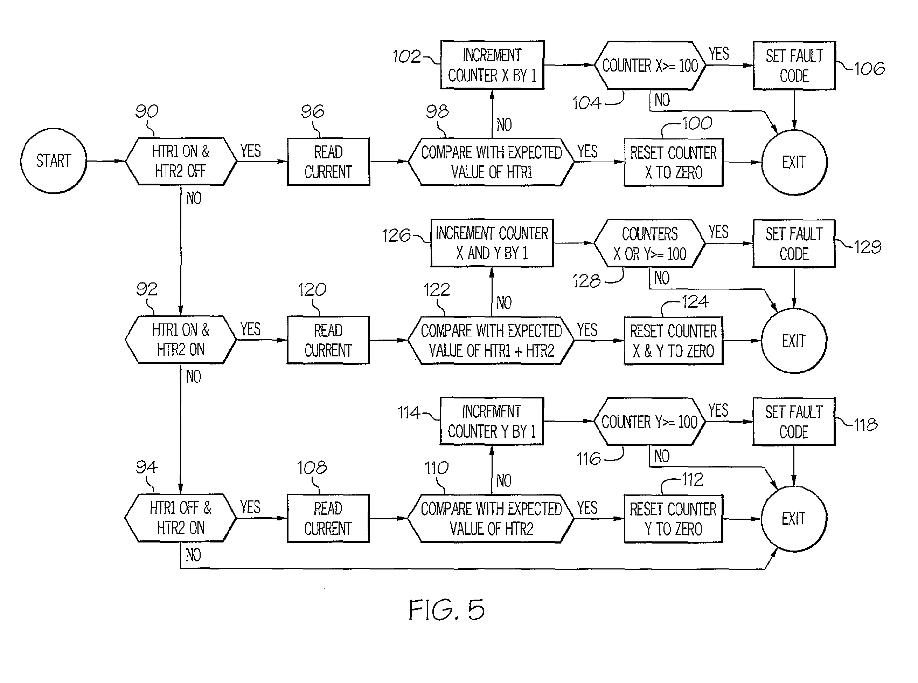

The flow diagram of FIG. 5 represents a software routine periodically executed by µP 52 of FIG. 2 for diagnosing the operation of heater elements 40 and 42 by sampling the current signal on line 74. The decision blocks 90, 92 and 94 respectively identify the first, second and third heater element modulation conditions mentioned above in respect to FIG. 3. If FETs 44 and 46 are both off (i.e., the fourth condition), the routine is exited.

If the first FET modulation condition (FET 44 on and FET 46 off) is true, the blocks 96 and 98 sample the heater current signal and compare it with an expected or commanded current value for heater element 40. If the sampled current is within a prescribed deviation of the expected or commanded value, block 100 resets a fault counter X to zero, completing the routine. If the sampled current is not within the prescribed deviation of the expected or commanded value, block 102 increments the fault counter X and block 104 compares the count value to a threshold count such as one-hundred. If the fault count reaches the threshold, the block 106 sets a fault code for heater element 40.

A similar procedure occurs when the third FET modulation condition (FET 44 off and FET 46 on) is true. In that case, blocks 108 and 110 sample the heater current signal and compare it with an expected or commanded current value for heater element 42. If the sampled current is within a prescribed deviation of the expected or commanded value, block 112 resets a fault counter Y to zero, completing the routine. If the sampled current is not within the prescribed deviation of the expected or commanded value, block 114 increments the fault counter Y and block 116 compares the count value to a threshold count such as one-hundred. If the fault count reaches the threshold, the block 118 sets a fault code for heater element 42.

If the second FET modulation condition (FETs 44 and 46 both on) is true, the blocks 120 and 122 sample the combined current and compare it with a reference value equal to the sum of the expected (or commanded) currents in heater elements 40 and 42. If the combined current is within a prescribed deviation of the reference value, block 124 resets both fault counters X and Y to zero, completing the routine. If the combined current is not within the prescribed deviation of the reference value, block 126 increments both fault counters X and Y, and block 128 compares the count values to a threshold count such as one-hundred. If the counts of fault counter X or fault counter Y have reached the threshold, the block 129 sets a fault code for both heater elements 40 and 42.

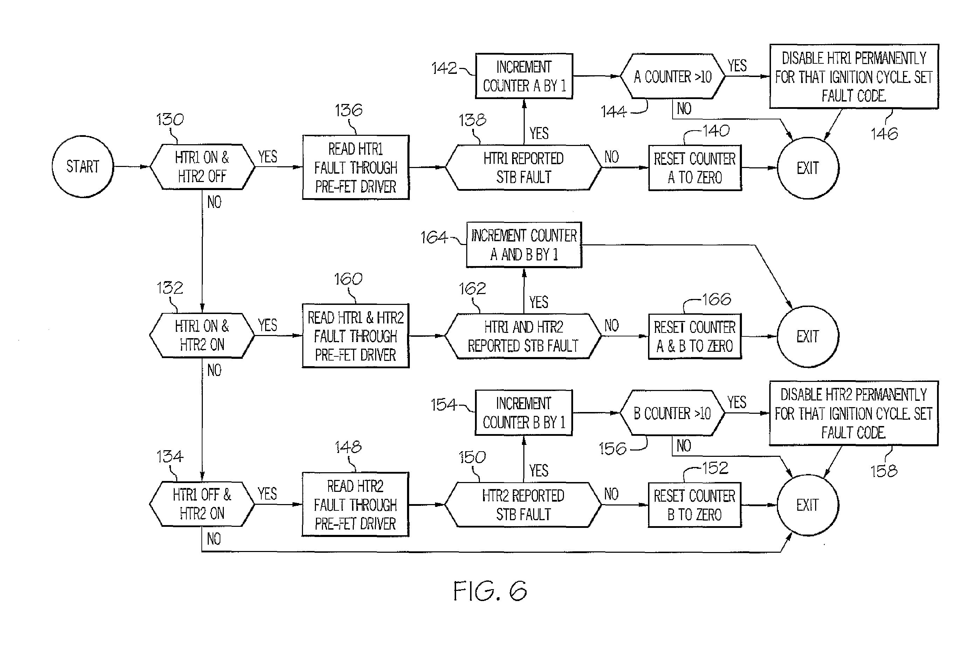

The flow diagram of FIG. 6 represents a software routine periodically executed by µP 52 of FIG. 2 for diagnosing short-to-battery faults of the heater elements 40 and 42. The decision blocks 130, 132 and 134 respectively identify the first, second and third heater element modulation conditions mentioned above in respect to FIG. 3. If FETs 44 and 46 are both off (i.e., the fourth condition), the routine is exited.

If the first FET modulation condition (FET 44 on and FET 46 off) is true, blocks 136 and 138 are executed to read and check the short-to-battery fault status of heating element 40 supplied by FDC 50. If there is no fault, block 140 resets a fault counter A to zero. If the short-to-battery fault status is true, block 142 increments the fault counter A and block 144 compares the count value to a threshold count such as ten. If and when the fault count reaches the threshold, the block 146 sets a fault code and disables further activation of FET 44 during the current key-on period.

A similar procedure occurs when the third FET modulation condition (FET 44 off and FET 46 on) is true. In that case, blocks 148 and 150 read and check the short-to-battery fault status of heating element 42 supplied by FDC 54. If there is no fault, block 152 resets a fault counter B to zero. If the short-to-battery fault status is true, block 154 increments the fault counter B and block 156 compares the count value to a threshold count such as ten. If and when the fault count reaches the threshold, the block 158 sets a fault code and disables further activation of FET 46 during the current key-on period.

If the second FET modulation condition (FETs 44 and 46 both on) is true, the blocks 160 and 162 read and check the short-to-battery fault status indications supplied by both FDC 50 and FDC 54. If both fault status indications are true, block 164 increments both fault counters A and B; otherwise, block 166 resets both fault counters A and B to zero.

In view of the above, it will be recognized that the control circuit of the present invention provides significant cost savings compared to the prior art approach where the heater control circuit elements of FIG. 1 are replicated for each oxygen sensor of an emission control system. And as mentioned, the approach of the present invention is easily extended to emission control systems having a higher number of heated oxygen sensors, resulting in even greater savings compared to the prior art approach. In any case, fault diagnosis of the heater elements is preserved because the µP 52 takes into account the modulation states of the heater elements when sampling the sense resistor voltage and reading the fault status signals.

While the present invention has been described with respect to the illustrated embodiment, it is recognized that numerous modifications and variations in addition to those mentioned herein will occur to those skilled in the art. Accordingly, it is intended that the invention not be limited to the disclosed embodiment, but that it have the full scope permitted by the language of the following claims.

## Claims

1. A control circuit for an engine exhaust emission control system having at least first and second oxygen sensor heating elements (40, 42), the control circuit comprising:
a first switching devices (44) selectively actuable to establish a first current supply path that includes the first oxygen sensor heating element (40), and a second switching device (46) selectively actuable to establish a second current supply path that includes the second oxygen sensor heating element (42);
a controller (52) for periodically actuating and de-actuating the first and second switching devices (44, 46) in staggered relationship so that actuation periods of the first and second switching devices (44, 46) are not completely overlapping;
a single sense resistor (48) connected in both the first current supply path and the second current supply path; and
a feedback circuit (72) responsive to a voltage across the sense resistor (48) for providing the controller (52) a feedback signal (74) corresponding to a magnitude of current in the sense resistor (48); where
said controller (52) diagnoses proper operation of the oxygen sensor heating elements (40, 42) based on the feedback signal (74), an actuation state of the first switching device (44) and an actuation state of the second switching device (46).

2. The control circuit of claim 1, where said controller (52) samples (96, 108, 120) said feedback signal (74), and compares the sampled feedback signal to a reference value (98, 110, 122) that depends upon the actuation states of said first and second switching devices (44, 46).

3. The control circuit of claim 2, where said reference value corresponds to a sum of expected currents in the first and second oxygen sensor heating elements (40, 42) if the first and second switching devices (44, 46) are both actuated.

4. The control circuit of claim 2, where:
said controller (52) increments a first count (102, 126) if the sampled feedback signal exceeds the reference value (98, 122) and the first switching device (44) is actuated (90, 92), increments a second count (114, 126) if the sampled feedback signal exceeds the reference value (110, 122) and the second switching device (46) is actuated (92, 94), and indicates an over-current condition if the first or second counts exceed a threshold.

5. The control circuit of claim 4, where:
said controller (52) resets said first count (100, 124) if the first switching device (44) is actuated (90, 92) and the sampled feedback signal is less than the reference value (98, 122), and resets said second count (112, 124) if the second switching device (46) is actuated (92, 94) and the sampled feedback signal is less than the reference value (110, 122).

6. The control circuit of claim 4, where:
said reference value corresponds to a sum of expected currents in the first and second heating elements (40, 42) if the first and second switching devices (44, 46) are both actuated; and
said controller (52) increments the first and second counts (126) if the sampled feedback signal exceeds the reference value (122) when the first and second switching devices (44, 46) are both actuated (92).

7. The control circuit of claim 1, further including first and second driver circuits (50, 54) coupled to the first and second switching devices (44, 46) for detecting short-circuit faults of the first and second oxygen sensor heating elements (40, 42) and providing fault status signals (68, 70) to said controller (52), where:
said controller (52) increments a first count (142) if the first switching device (44) is actuated (130) and the fault status signal provided by the first driver circuit (50) indicates a short-circuit fault of said first oxygen sensor heating element (40), increments a second count (154) if the second switching device (46) is actuated (134) and the fault status signal provided by the second driver circuit (54) indicates a short-circuit fault of said second oxygen sensor heating element (42), and disables (146, 158) said first switching device (44) if said first count exceeds a first threshold (144) and said second switching device (46) if said second count exceeds a second threshold (156).

8. The control circuit of claim 7, where:
said controller (52) increments said first and second counts (164) if the first and second switching devices (44, 46) are both actuated (132) and the fault status signals provided by the first and second driver circuits (50, 54) indicate short-circuit faults of both first and second oxygen sensor heating elements (40, 42).

9. The control circuit of claim 7, where:
said controller (52) resets the first and second counts (166) if the first and second switching devices (44, 46) are both actuated (132) and at least one of the fault status signals provided by the first and second driver circuits (50, 54) indicates a normal condition of the respective oxygen sensor heating element (40, 42).
